## Europäisches Patentamt
## European Patent Office
## Office européen des brevets

(19)

(11) Numéro de publication: **0 166 645**
**B1**

(12) **FASCICULE DE BREVET EUROPEEN**

(51) Int. Cl.⁴: **F 16 G 3/02**

(45) Date de publication du fascicule du brevet:
**11.05.88**

(21) Numéro de dépôt: **85401112.9**

(22) Date de dépôt: **06.06.85**

(54) **Axe flexible pour la réunion et l'articulation des agrafes de jonction d'un tapis transporteur.**

(30) Priorité: **26.06.84 FR 8410026**

(43) Date de publication de la demande:
**02.01.86 Bulletin 86/1**

(45) Mention de la délivrance du brevet:
**11.05.88 Bulletin 88/19**

(84) Etats contractants désignés:
**BE DE FR GB IT**

(56) Documents cités:
**DE - B - 1 234 459**
**DE - B - 2 449 792**
**FR - A - 2 118 395**
**FR - A - 2 196 683**
**US - A - 4 007 303**
**US - A - 4 024 605**

(73) Titulaire: **GORO S.A., Avenue de Sylvie, F-77500 Chelles (FR)**

(72) Inventeur: **Schick, Jean-François, 75 Rue de l'Assomption, F-75016 Paris (FR)**

(74) Mandataire: **Tony-Durand, Serge, Cabinet Tony-Durand 77, rue Boissière, F-75116 Paris (FR)**

ACTORUM AG

## Description

La présente invention est relative à la jonction de tapis transporteurs au moyen de deux rangées d'agrafes métalliques, réunies par un axe d'articulation.

Les agrafes utilisées à cet effet sont constituées par des éléments de forme en U, susceptibles d'être disposés à cheval sur l'extrémité correspondante d'un tapis transporteur pour être fixés au moyen de crampons métalliques ou tous autres organes appropriés. Ces agrafes présentent des charnons disposés en saillie par rapport au bord de l'extrémité correspondante du tapis et l'agencement est tel que les charnons de deux rangées complémentaires puissent être imbriqués pour être réunis par engagement d'un axe de jonction à l'intérieur du passage formé par ces charnons.

Cet axe permet donc l'articulation des deux rangées correspondantes d'agrafes lors du passage du tapis sur un tambour d'entraînement ou de renvoi. Cependant il est nécessaire que cet axe puisse fléchir dans le sens transversal pour que le tapis puisse prendre une forme d'auge sur les rouleaux d'un convoyeur, lorsqu'il est en service. C'est la raison pour laquelle les axes de ce genre sont en général constitués par un câble torsadé en fils métalliques.

Cependant ces axes subissent des efforts importants de frottement dûs à l'articulation des charnons des agrafes sur ceux-ci. Ceci entraîne une usure rapide de ces axes. Par ailleurs il existe des risques importants de grippage des charnons des agrafes sur ces axes.

Pour essayer d'éviter ces inconvénients, il a été proposé de prévoir, autour des axes de jonction de ce genre, des bagues rotatives ou similaires qui se trouvent ainsi interposées entre les charnons des agrafes et l'axe correspondant. Une solution de ce genre est décrite dans la demande allemande DE-A-2 507 474. Cependant une telle solution a l'inconvénient d'être particulièrement onéreuse. Par ailleurs elle ne résoud qu'imparfaitement le problème en cause, d'autant plus que par leur présence les bagues rotatives ainsi prévues ont l'inconvénient de diminuer la flexibilité de l'axe d'articulation.

Par ailleurs le brevet FR-A-2 118 395 décrit un axe de jonction comportant une âme centrale formée par un toron en métal autour de laquelle sont torsadés plusieurs autres torons en métal, l'ensemble étant enfermé dans une gaine externe en matière plastique qui est extrudée dessus. Cependant un tel axe ne présente pas une résistance suffisante à l'usure du fait même que sa surface externe est constituée par la gaine en matière plastique.

C'est pourquoi la présente invention a pour but de réaliser un axe de jonction conçu de façon à permettre une bonne articulation des charnons des agrafes et à comporter néanmoins une flexibilité satisfaisante, tout en ayant une très bonne résistance à l'usure.

A cet effet, l'invention a pour objet un axe flexible pour la réunion et l'articulation de deux rangées complémentaires d'agrafes de jonction d'un tapis transporteur ou similaire, comportant une âme centrale flexible, pouvant être constituée par un câble métallique ou similaire et une gaine en matière plastique flexible enveloppant cette âme, et caractérisé en ce qu'il est prévu en outre une enveloppe externe de forme tubulaire, formée par le torsadage d'un ou plusieurs monotorons en fil d'acier ou autre métal approprié, de sorte que la gaine en matière plastique occupe une position intermédiaire entre l'âme centrale et cette enveloppe externe et peut jouer ainsi le rôle d'un élément intermédiaire permettant le glissement de l'un de ces éléments par rapport à l'autre, le torsadage de l'enveloppe externe pouvant être de même sens ou de sens inverse au sens du torsadage de l'âme interne.

Ainsi, la résistance mécanique de l'âme interne de cet axe se trouve renforcée par l'enveloppe externe prévue autour de celui-ci. Cependant, du fait de sa nature cette enveloppe ne s'oppose pas à la flexibilité de l'axe. Du reste, la subdivision du présent axe en deux éléments distincts — à savoir: l'âme interne et l'enveloppe externe — favorise la flexion de cet axe, ces deux éléments pouvant alors glisser l'un sur l'autre pendant leur flexion. Or, l'interposition de la gaine intermédiaire en matière plastique a pour avantage essentiel qu'il ne risque pas de se produire un grippage entre les deux éléments en cause, lequel grippage constituerait un obstacle à un glissement normal et pourrait entraîner une usure prématurée de ces éléments.

Dans une forme de réalisation avantageuse, la gaine intermédiaire du présent axe est réalisée en une matière plastique chargée de graisse, ou en graisse dure, susceptible de fluer sous l'effet de mouvements relatifs se produisant entre les divers éléments constitutifs de cet axe, lors de la flexion de celui-ci, afin qu'une fraction de cette graisse s'étale à la surface de cet axe. La lubrification ainsi obtenue a l'avantage d'éviter tout risque de grippage des charnons des agrafes de jonction sur le présent axe. De plus, cette lubrification permet une bonne articulation de ces charnons sans usure prématurée de l'axe de jonction.

L'axe de jonction selon l'invention peut faire l'objet de diverses formes de réalisation différentes. Certaines d'entre elles sont décrites ci-après en référence au dessin annexé à simple titre indicatif, et sur lequel:

la figure 1 est une vue en perspective représentant la jonction des deux extrémités d'un tapis transporteur au moyen de deux rangées d'agrafes de jonction et d'un axe assurant la réunion et l'articulation de celles-ci;

la figure 2 est une vue schématique en coupe transversale, à échelle différente, d'un tapis transporteur en cours d'utilisation sur un convoyeur;

la figure 3 est une vue en coupe longitudinale, à échelle differente, de la jonction représentée à la figure 1, cette vue correspondant à une coupe selon la ligne III-III de la figure 1;

les figures 4 et 5 sont des vues en perspective, avec arrachement, de deux formes de réalisation différentes de l'axe flexible de jonction selon l'invention;

la figure 6 est une vue schématique en perspective illustrant les conditions de flexion de l'axe représenté à la figure 4.

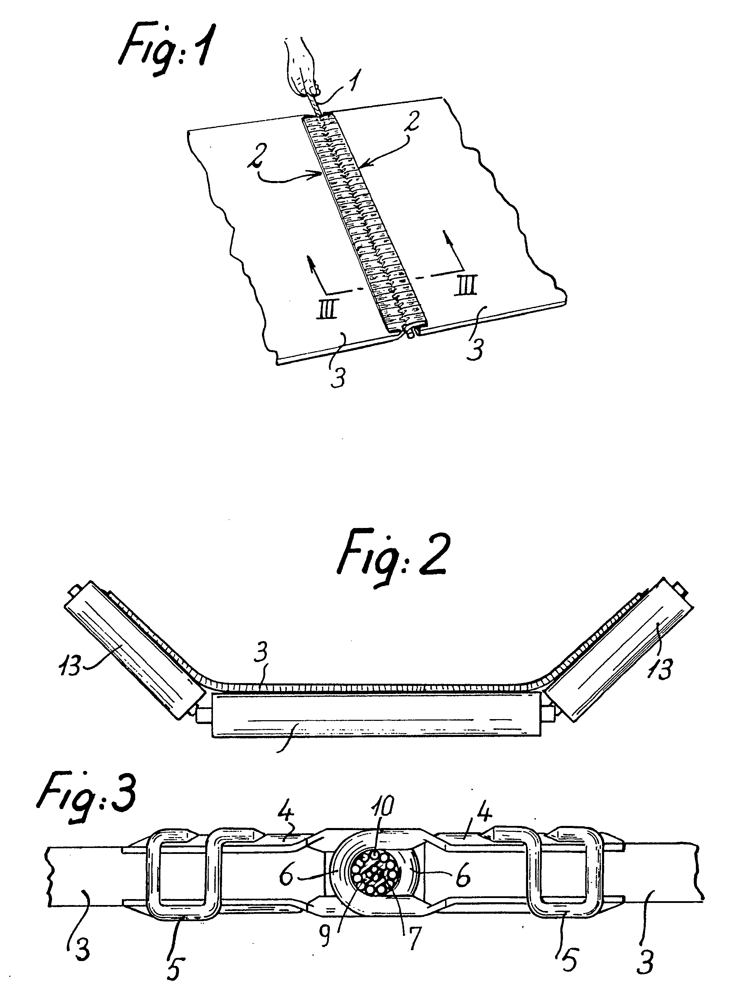

Comme représenté sur la figure 1, l'axe flexible 1 selon l'invention est destiné à assurer la réunion de deux rangées 2 d'agrafes métalliques disposées à cheval sur les extrémités 3 d'un tapis transporteur devant être fermé sur lui-même. Les agrafes 4 de ces deux rangées présentent une forme générale en U et elles sont disposées à cheval sur l'une et l'autre extrémités du tapis. Leur fixation est assurée par exemple par des crampons métalliques 5. Ces agrafes présentent des charnons 6 destinés à être imbriqués les uns entre les autres pour être réunis au moyen d'un axe 1 enfilé dans le passage formé par ces divers charnons après imbrication de ceux-ci (voir figures 1 et 3). Cet axe est flexible de façon à permettre l'incurvement du tapis transporteur dans le sens transversal, comme représenté à la figure 2.

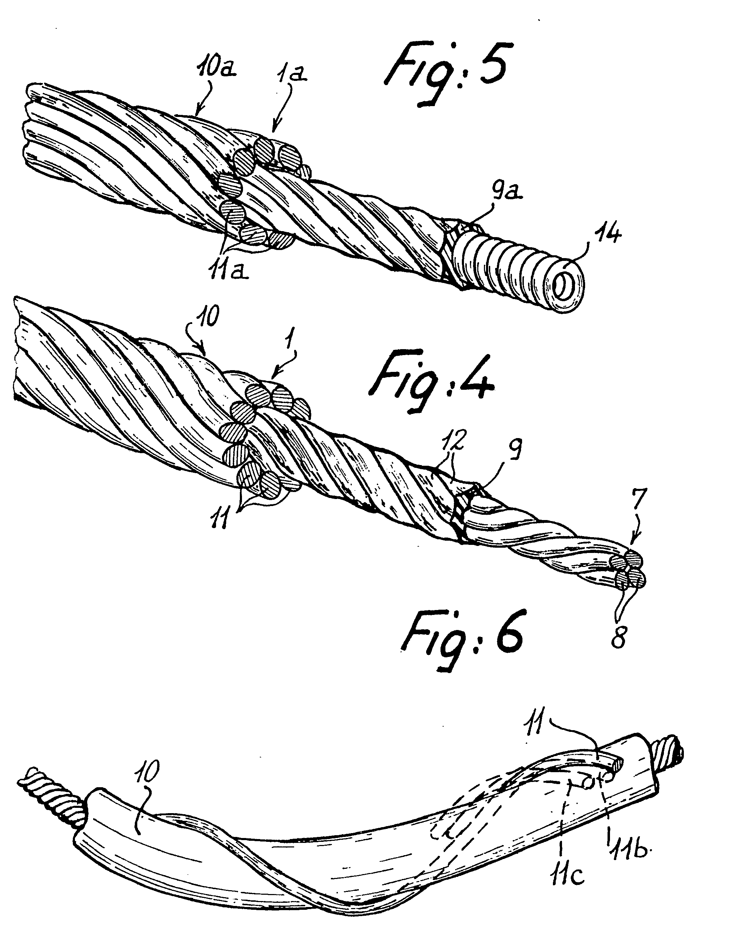

Dans la forme de réalisation représentée à la figure 4, l'axe 1 selon l'invention est constitué par la combinaison de trois éléments concentriques, à savoir:

— une âme centrale constituée par un câble métallique 7 formé par le torsadage de plusieurs multirons 8 en fils métalliques,

— une gaine intermédiaire 9 en matière plastique,

— et enfin, une enveloppe externe 10, formée par le torsadage de plusieurs fils 11 d'acier, ou autre métal approprié.

Il convient de noter que dans l'exemple représenté le sens du torsadage de cette enveloppe est inverse du sens de torsadage du câble central 7. Cependant, l'enveloppe externe pourrait également avoir le même sens de torsadage que le câble central 7.

En pratique la gaine intermédiaire 9 est réalisée par extrusion directement autour du câble central 7, l'enveloppe externe 10 étant pour sa part torsadée ensuite sur cette gaine, de sorte que les fils d'aciers 11 de cette enveloppe viennent s'imprimer sur la surface externe de cette gaine en y formant des rainures hélicoïdales 12. La matière plastique utilisée pour la réalisation de la gaine intermédiaire 9 par extrusion peut être par exemple du polyéthylène.

Compte-tenu de sa structure, cet axe présente la flexibilité voulue pour permettre au tapis transporteur 3 de s'incurver en forme d'auge sur les rouleaux de guidage 13 d'un convoyeur, comme représenté sur la figure 2. Néanmoins, cet axe présente une très grande résistance mécanique lui permettant de transmettre les efforts voulus de traction entre une extrémité et l'autre d'un tapis transporteur.

Cependant, la présence de la gaine externe 10 n'est pas un obstacle à la flexibilité du présent acte, — bien au contraire —. En effet, la réalisation de cet axe sous forme de deux éléments métalliques distincts — à savoir: l'âme interne et l'enveloppe externe — favorise sa flexibilité dans le sens transversal, car ces éléments peuvent glisser l'un sur l'autre pendant leur flexion. Du reste, l'interposition de la gaine intermédiaire 9 en matière plastique favorise ce glissement en évitant tout risque de grippage entre les deux éléments en cause, avec les inconvénients qui en seraient résulté, en l'occurrence: diminution de la flexibilité de l'axe et risque d'usure prématurée de ses éléments constitutifs. Le schéma de la figure 6 illustre le glissement qui peut se produire dans un tel cas pour un toron 11 déterminé de l'enveloppe externe 10, lequel toron peut occuper successivement les positions 11b et 11c, du fait de sa différence de flexion par rapport à la flexion de l'âme interne 7.

Dans une forme de réalisation avantageuse, la gaine intermédiaire 9 est réalisée en une matière plastique, par exemple du polyéthylène, chargée d'une graisse susceptible de migrer à l'extérieur sous l'effet des déformations imposées ultérieurement à cette gaine. Cette graisse peut être une graisse à base de silicone ou de bisufure de molybdène. Dans ce cas, l'axe selon l'invention est en mesure d'assurer la lubrification de sa surface de contact avec les charnons 6 des agrafes. En effet, les contraintes et déformations imposées à la gaine intermédiaire 9, lors de diverses flexions de l'axe, provoquent la migration de la graisse contenue à l'intérieur de cette gaine 10. Dans ces conditions cette graisse est amenée à fluer entre les monotorons 11 de l'enveloppe externe 10. Ceci l'amène donc à lubrifier la surface externe de cette enveloppe. Or, une très faible quantité de graisse suffit à assurer la lubrification voulue, de sorte qu'un axe flexible selon l'invention est susceptible d'assurer une bonne lubrification pendant une longue durée.

Une telle lubrification permet donc d'éviter les risques de grippage des charnons 6 des agrafes de jonction. Cette lubrification a également l'avantage de faciliter l'articulation des charnons 6, en évitant de la sorte une usure trop rapide de leur axe de jonction.

La figure 5 représente une autre forme de réalisation dans laquelle la structure de l'axe flexible correspondant la diffère de la précédente uniquement par le fait qu'au lieu d'être constitué par un câble 7, l'âme centrale consiste en un ressort métallique 14. Quant aux autres éléments costitutifs de cet axe 1a, ils sont indentiques à ceux prévus précédemment puisqu'ils consistent en une enveloppe externe 10a identique à l'enveloppe 10, et une gaine intermédiaire 9a en matière plastique, identique à la gaine 9 de la figure 4.

De préférence, la matière plastique constituant cette gaine est également chargée d'une graisse susceptible de migrer à l'extérieur, Par ailleurs, de même que pour le câble 7 de la forme de réalisation selon la figure 4, le sens de torsadage de ce ressort est inverse du sens de torsadage des monotorons 11 de l'enveloppe externe 10 du câble correspondant.

En effet, l'inversion de ces deux sens de torsadage est une des conditions pour obtenir que les déformations subies par l'âme interne et par l'enveloppe externe exercent, sur la garniture intermédiaire 9 ou 9a, des contraintes de nature appropriée pour provoquer la migration de la graisse contenue à l'intérieur de celle-ci. Bien que l'âme interne du câble selon la figure 5 soit constituée par un ressort métallique, on obtient donc le même résultat qu'avec la forme de réalisation de la figure 4.

Il faut observer que les monotorons de l'enveloppe externe 7 ou 7a de chacune des formes de réalisation décrites ci-dessus, peuvent avoir une section autre que circulaire, par exemple une section de forme telle que la surface de cette enveloppe soit à peu près lisse, de façon à réaliser une excellente surface d'appui pour les charnons 6 des agrafes de jonction. Du reste, l'axe flexible de jonction selon l'invention n'est pas limité aux deux formes de réalisation repré-

sentées aus figures 4 et 5, celles-ci ayant été décrites à simple titre d'exemple indicatif.

## Revendications

1. Axe flexible pour la réunion et l'articulation de deux rangées complémentaires d'agrafes de jonction d'un tapis transporteur ou similaire, comportant une âme centrale flexible, pouvant être constituée par un câble métallique ou similaire et une gaine en matière plastique flexible enveloppant cette âme, et caractérisé en ce qu'il est prévu en outre une enveloppe externe (10, 10a) de forme tubulaire, formée par le torsadage d'un ou plusieurs monotorons en fil d'acier ou autre métal approprié, de sorte que la gaine (9, 9a) en matière plastique occupe une position intermédiaire entre l'âme centrale (7, 14) et cette enveloppe externe et peut jouer ainsi le rôle d'un élément intermédiaire permettant le glissement de l'un de ces éléments par rapport à l'autre, le torsadage de l'enveloppe externe pouvant être de même sens ou de sens inverse au sens du torsadage de l'âme interne (7, 14).

2. Axe flexible selon la revendication 1, caractérisé en ce que la gaine intermédiaire (9, 9a) est réalisée en une matière plastique chargée de graisse, ou en graisse dure, susceptible de fluer sous l'effet des mouvements relatifs se produisant entre les divers éléments constitutifs de cet axe, lors de la flexion de celui-ci, afin qu'une fraction de cette graisse s'étale à la surface de cet axe.

3. Axe flexible selon la revendication 1 ou 2, caractérisé en ce qu'au lieu d'être constituée par un câble métallique, l'âme centrale de celui-ci consiste en un ressort (14) en acier, au autre métal approprié, autour duquel est extrudée la gaine intermédiaire (9a) en matière plastique.

## Patentansprüche

1. Biegsame Achse zur gelenkbeweglichen Verbindung von Transportbändern oder dergleichen mit zwei Reihen ineinandergreifender Verbinderklammern, mit einer biegsamen Seele aus einem Metallkabel oder dergleichen und einem die Seele umgebenden biegsamen Kunststoffmantel, dadurch gekennzeichnet, dass die Seele (7, 14) und der Kunststoffmantel (9, 9a) von einem rohrartigen Aussenmantel (10, 10a) aus einem oder mehreren schraubenlinienartig um den Kunststoffmantem (9, 9a) gewundenen Einzellitzen aus Stahl oder einem anderen geeigneten Metall derart umgeben ist, dass der zwischen der Seele (7, 14) und dem Aussenmantel (10, 10a) liegende Kunststoffmantel (9, 9a) ein Gleitelement für Gleitbewegungen zwischen der Seele (7, 14), dem Kunststoffmantel (9, 9a) und dem Aussenmantel (10, 10a) bildet, wobei die Windungsrichtung des Aussenmantels (10, 10a) gleichsinnig oder gegensinnig zur Windungsrichtung der Seele (7, 14) gerichtet ist.

2. Biegsame Achse nach Anspruch 1, dadurch gekennzeichnet, dass der Kunststoffmantel (9, 9a) mit Schmierfett beschichtet oder durch einen Mantel aus hartem Schmierfett ersetzt ist, und dass das Schmierfett infolge der durch Achsenbiegung zwischen den Achsenteilen auftretenden Relativbewegungen fliessfähig wird und sich ein Teil des Schmierfettes auf der Achsenoberfläche verteilt.

3. Biegsame Achse nach Anspruch 1 oder 2, dadurch gekennzeichnet, dass die Seele aus einer Feder (14) aus Stahl oder einem anderen geeigneten Metall besteht und der Kunststoffmantel (9a) um die Feder extrudiert ist.

## Claims

1. Flexible pin for connection and articulation of two complementary rows of fastening staples of a conveyor belt or the like, comprising a flexible central core which can be constituted by a metallic cable or the like and a sheath of flexible plastic material surrounding this core and characterized in that provision is additionally made for an outer jacket (10, 10a) of tubular shape formed by twisting one or a number of single wire strands of steel or other suitable metal, with the result that the sheath (9, 9a) of plastic material occupies an intermediate position between the central core (7, 14) and this outer jacket and can thus perform the function of an intermediate element which permits sliding of one of these elements with respect to the other, twisting of the outer jacket being either in the same direction or in the direction opposite to the direction of twist of the inner core (7, 14).

2. Flexible pin in accordance with claim 1, characterized in that the intermediate sheath (9, 9a) is formed of plastic material filled with grease or with hard grease which is capable of flowing under the action of the relative movements which take place between the different constituent elements of this pin at the time of flexural deformation of this latter in order to ensure that a fraction of this grease spreads over the surface of this pin.

3. Flexible pin in accordance with claim 1 or 2, characterized in that, instead of being constituted by a metallic cable, the central core of this latter consists of a spring (14) of steel or other suitable metal around which is extruded the intermediate sheath (9a) of plastic material.

*Fig:1*

*Fig:2*

*Fig:3*

Fig: 5

10a   1a

9a

14

11a

Fig: 4

10

1

12   9

11

7

8

Fig: 6

11

10

11b

11c